# FASCICULE DE BREVET EUROPEEN

(11) **EP 1 151 835 B1**
(45) Date de publication et mention de la délivrance du brevet: **18.08.2004**
(21) Numéro de dépôt: 01401150.6
(22) Date de dépôt: 03.05.2001
(51) Int. Cl.: B26D 7/06, B26D 7/24, A47J 43/25

(54) **Appareil électrique de traitement d'aliments comportant un organe presseur**
Elektrogerät zur Lebensmittelbearbeitung mit Druckorgan
Electric foodstuff-treating appliance equipped with a pressing member

(30) Priorité: 05.05.2000 FR 0005820
(43) Date de publication de la demande: 07.11.2001
(73) Titulaire: Dito Sama, 23200 Aubusson (FR)
(72) Inventeur: Fombreteau, Bernard, 23200 St Medard la Rochette (FR); Derbise, Guillaume, chez Mme Monsnier Francine, 94400 Vitry sur Seine (FR); Descomps, Xavier, 23500 Felletin (FR); Paturel, Bruno, 23200 Aubusson (FR)
(74) Mandataire: Blot, Philippe Robert Emile

(56) Documents cités:
- DE-A- 19 814 355
- FR-A- 1 324 653
- FR-A- 2 161 531
- FR-A- 2 785 562
- US-A- 1 768 094
- US-A- 4 216 917
- US-A- 4 610 398

## Description

La présente invention concerne un appareil électrique de traitement d'aliments, notamment utilisé dans la restauration collective pour couper ou hacher des légumes.

Plus précisément, l'invention concerne un appareil conforme au préambule de la revendication 1.

Un tel appareil est décrit dans le document US-A-4 610 398.

Un problème qui se pose dans ce genre d'appareil est la difficulté de manipuler le récipient amovible, soit pour sa mise en place sur l'appareil, soit pour son retrait. Cette manoeuvre doit être effectuée en maintenant l'organe presseur dégagé du récipient, ou de l'espace prévu pour celui-ci. L'utilisateur doit par conséquent maintenir l'organe de manoeuvre dans sa position haute de repos, et simultanément manoeuvrer le récipient amovible, ce qui est rendu difficile, en particulier dans le cas d'appareils de grandes dimensions prévus pour les besoins de restauration collective, par le poids de l'organe de manoeuvre et de l'organe presseur.

Afin de remédier à cet inconvénient, un appareil électrique de traitement d'aliments suivant l'invention est conforme à la revendication 1.

D'autres caractéristiques de l'invention sont énoncées dans les revendications 2 à 12.

Des exemples de réalisation de l'invention vont maintenant être décrits en regard des dessins annexés, sur lesquels :
- la Figure 1 est une vue en perspective d'un appareil suivant l'invention dans son environnement d'utilisation, le socle étant représenté en position de travail (en traits pleins) et en position dégagée de l'organe presseur (en traits mixtes) ;
- la Figure 2 est une vue en coupe de côté d'un appareil suivant la Figure 1, l'organe presseur et l'organe de manoeuvre étant représentés en position haute de repos (en traits pleins) et en position basse (en traits mixtes);
- la Figure 3 est une vue en élévation de face de la partie supérieure de la tige et de l'organe en saillie ;
- la Figure 4 est une vue en perspective de l'organe de guidage ;
- la Figure 5 est une vue de dessus de l'ensemble formé par la tige, l'organe en saillie et l'organe de guidage ;
- les Figures 6A à 6E représentent schématiquement le fonctionnement du dispositif de commande de l'alimentation électrique du moteur selon l'invention, dans cinq positions relatives successives de l'organe en saillie, de l'organe de guidage et de l'organe de commande, la partie supérieure de la tige et l'organe en saillie étant représentés en élévation de côté ;
- la Figure 7 représente les positions successives du doigt de l'organe en saillie dans la gorge de l'organe de guidage et les états d'alimentation du moteur électrique correspondant ; et
- la Figure 8 est une coupe suivant la ligne 8-8 de l'ensemble représenté à la Figure 6C.

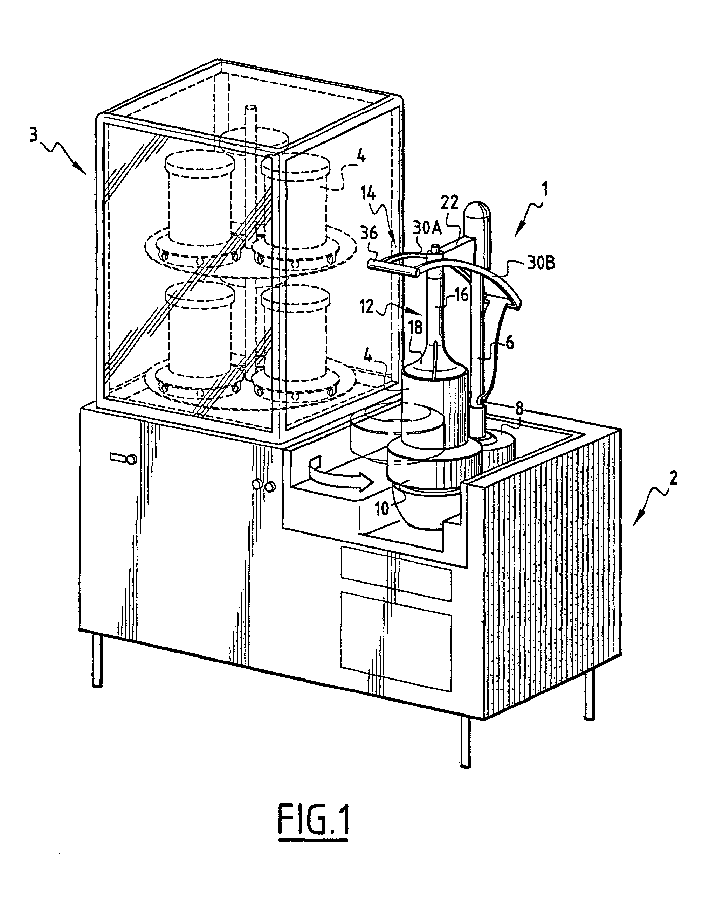

A la Figure 1 on a représenté un appareil électrique 1 de traitement d'aliments plus particulièrement destiné à un usage en restauration collective, sur un poste de travail 2 pourvu d'un compartiment de rangement et de présentation 3, dans lequel sont stockées des cassettes 4 contenant des aliments à traiter.

Ces aliments sont par exemple des légumes entiers ou en morceaux destinés à être râpés, hachés ou tranchés.

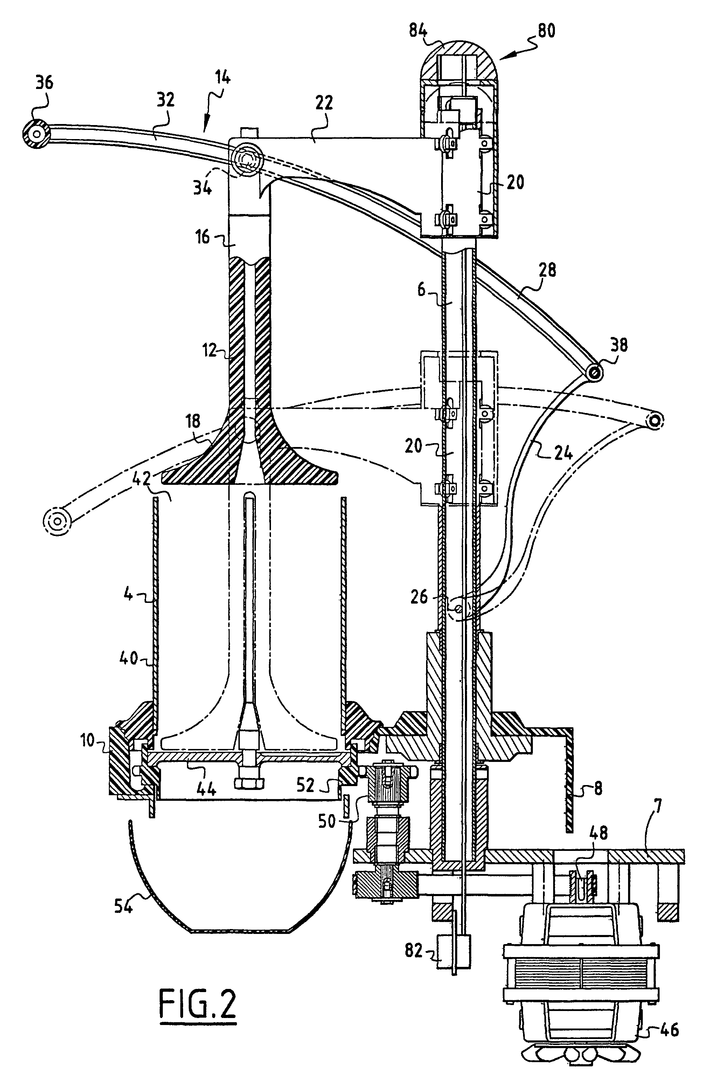

L'appareil 1 comporte une tige verticale 6 fixée au poste de travail 2 par l'intermédiaire d'un bâti 7 partiellement recouvert par un cache 8, comme représenté sur la Figure 2. Le cache 8 est relié de façon rigide à un socle 10 adapté pour recevoir la partie inférieure d'une cassette 4 et maintenir celle-ci en position durant toute l'opération de traitement des aliments contenus dans la cassette.

Comme cela a été représenté en traits mixtes, le socle 10 peut pivoter autour de la tige verticale 6, dans un plan horizontal, solidairement avec le cache 8 entre une position de travail et une position de dégagement de la cassette 4.

L'appareil 1 comporte un organe presseur 12 formé d'un piston d'axe vertical déplaçable en translation verticale au moyen d'un organe de manoeuvre 14 démultiplicateur d'efforts. L'organe presseur 12 est constitué d'une tige de piston 16 verticale reliée à son extrémité inférieure à un plateau de pressage 18 de forme sensiblement circulaire complémentaire d'une section horizontale de cassette 4, de façon à pouvoir se déplacer verticalement dans ladite cassette 4 et à former un obturateur protégeant l'accès au contenu de la cassette. L'extrémité supérieure de la tige de piston 16 est solidaire d'un manchon 20 coulissant sur la tige verticale 6, par l'intermédiaire d'une traverse 22 horizontale.

Comme il sera mieux vu à la Figure 2, l'organe de manoeuvre 14 est configuré comme un double levier qui comprend une biellette 24 articulée sur une partie inférieure de la tige verticale 6 autour d'un axe de pivotement matérialisé par des tourillons horizontaux 26 au niveau de l'extrémité inférieure de ladite biellette 24. La deuxième extrémité de la biellette 24 reçoit à pivotement un bras 28 au niveau d'une première extrémité dudit bras 28. La biellette 24 et l'organe presseur 12 s'étendent de part et d'autre de la tige verticale 6, et sont reliés par le bras 28 qui comporte deux rails parallèles 30A, 30B de forme incurvée passant de part et d'autre de la tige verticale 6. Les rails 30A, 30B sont articulés sur l'extrémité supérieure de la tige de piston 16 par l'intermédiaire d'un pion respectif 34. Une poignée 36 horizontale relie les extrémités de chacun des deux rails 30A, 30B qui constituent la seconde extrémité du deuxième bras 28, opposée à l'axe 38 de pivotement commun de la biellette 24 et du bras 28.

Une cassette 4 est un récipient amovible adapté à l'appareil 1 qui comprend une paroi cylindrique 40 translucide formant dans sa partie supérieure une ouverture circulaire 42 complémentaire du plateau de pressage 18, la base de la cassette 4 comportant un outil de coupe rotatif 44 formant paroi de fond.

L'appareil 1 comporte par ailleurs un moteur électrique 46, disposé sous le bâti 7, dont l'arbre de sortie 48 est mécaniquement lié à un ensemble réducteur dissimulé sous le cache 8. L'ensemble réducteur comprend un pignon 50 susceptible d'entraîner une couronne dentée 52 solidaire de l'outil de coupe 44, lorsque la cassette 4 est en place dans le socle 10, à condition que celui-ci soit dans sa position de travail.

On comprend aisément que l'utilisateur peut manoeuvrer la poignée 36 de l'organe de manoeuvre 14 dans le sens désiré du mouvement de l'organe presseur 12.

L'organe de manoeuvre 14 a été représenté en traits pleins sur la Figure 2 dans une position haute de repos, dans laquelle l'organe presseur est dégagé de la cassette, et en traits mixtes dans une position basse dans laquelle l'organe presseur 12 se situe à proximité de l'outil de coupe 44, cette situation correspondant à une fin d'opération de traitement des aliments contenus dans la cassette 4. Dans cette dernière situation, les aliments traités sont passés au travers de l'outil de coupe 44 et ont été recueillis dans un bol de réception 54 placé sous le socle 10 en regard de l'outil de coupe 44.

L'appareil 1 comporte un dispositif mécanique de maintien du manchon coulissant 20 en position haute, de façon que l'utilisateur puisse faire pivoter le socle 10 autour de la tige mobile 6 et placer une cassette 4 sur le socle 10 ou retirer la cassette déjà en place.

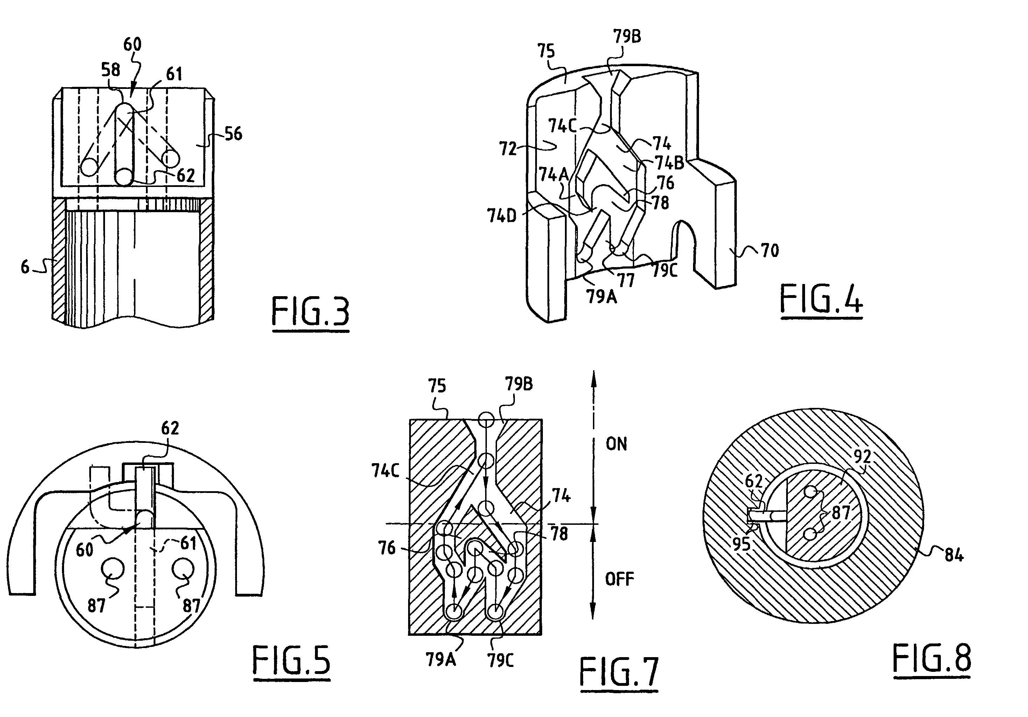

Le dispositif mécanique de maintien va maintenant être décrit de façon plus précise en référence aux Figures 3 à 5.

La tige verticale 6 constituée d'un cylindre métallique est coupée à son extrémité supérieure par un plan vertical de façon à présenter un méplat vertical 56, qui présente dans une région supérieure médiane un trou 58 adapté pour recevoir l'axe de pivotement d'un pendule 60. Le pendule 60 est formé d'une barrette cylindrique métallique coudée à 90° en deux points, affectant la forme d'une manivelle et définissant trois portions, dont deux portions d'extrémité parallèles 61, 62. Une première portion d'extrémité insérée 61 dans le trou 58 matérialise l'axe de pivotement du pendule 60, et l'autre portion d'extrémité 62 étant mobile angulairement autour et au-dessous dudit axe de pivotement. Ladite deuxième portion 62 constitue un organe de rétention en saillie destiné à coopérer avec un organe de guidage 70 représenté en perspective à la Figure 4.

L'organe de guidage 70 se présente comme une partie de manchon de forme extérieure semi-cylindrique, fixée à l'extrémité supérieure du manchon coulissant 20. La paroi interne 72 de l'organe de guidage 70 présente une gorge 74 destinée à recevoir l'extrémité libre du doigt de rétention 62 du pendule 60, lorsque l'organe de guidage 70 est dans une position de recouvrement de l'extrémité haute de la tige verticale 6. La gorge 74 définit un chemin qui présente deux branches 74A, 74B s'étendant sensiblement verticalement, décalées horizontalement, qui se rejoignent dans une région supérieure de l'organe de guidage 70 pour former une branche commune 74C, débouchant sur le rebord supérieur 75 de l'organe de guidage 70, en une ouverture évasée 79B.

Entre les deux branches verticales 74, 74B, la gorge définit un îlot 76 formant taquet, qui par coopération du doigt de rétention 62 avec un cran 78 formé dans une partie inférieure de l'îlot 76, assure le maintien en position haute de repos de l'organe presseur 12 et de l'organe de manoeuvre 14.

Dans une portion de transition transversale 74D située sous l'îlot 76, joignant les deux branches verticales 74A, 74B, sont formés un premier et un deuxième crans de fond de gorge 79A, 79C. Les crans de fond de gorge 79A, 79C ainsi définis sont séparés par une dent 77 tournée vers le haut sur laquelle sont formées une face inclinée matérialisant le passage du cran 78 vers le premier cran de fond de gorge 79A, ainsi qu'une face verticale matérisalisant le passage du deuxième cran de fond de gorge 79C vers le cran 78.

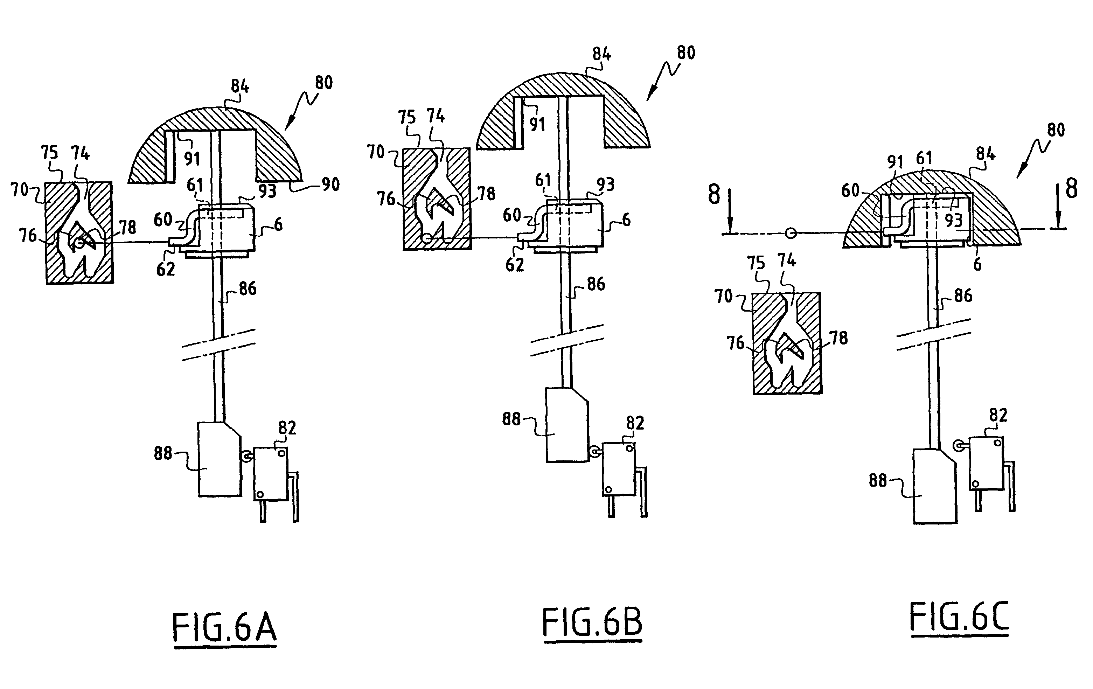

La disposition mutuelle du doigt de rétention 62 du pendule 60, et de l'organe de guidage 70 apparaît plus clairement à la Figure 5.

On comprend que pour déplacer l'organe de manoeuvre 14 vers le bas, le doigt de rétention 62 doit d'abord être extrait du cran 78 ; il faut par conséquent déplacer l'organe de guidage 70 solidairement avec l'organe de manoeuvre 14 vers le haut afin de dégager le doigt de rétention 62 du cran 78, et permettre ensuite le déplacement vers le bas de l'organe de manoeuvre 14 et de l'organe presseur 12.

Compte-tenu de la configuration du pendule 60 et de l'organe de guidage 70, on comprendra aisément le cheminement du doigt de rétention 62 dans la gorge 74 de l'organe de guidage 70 suivant les différentes positions de l'organe de manoeuvre 74. Ces positions sont davantage explicitées sur les Figures 6A à 6E et 7.

L'appareil qui vient d'être décrit comprend un dispositif de commande de l'alimentation électrique du moteur 46 associé au dispositif mécanique de maintien de l'organe de manoeuvre 14 détaillé plus haut.

Ce dispositif de commande va maintenant être décrit en référence aux Figures 6A-6E, 7 et 8.

Sur les Figures 6A-6E, on a représenté différentes positions relatives de l'organe de guidage 70 et du pendule 60, l'organe de guidage 70 et le doigt de rétention 62 étant représentés schématiquement.

Le dispositif de commande de l'alimentation électrique du moteur comporte un organe de commande 80 coopérant avec un interrupteur électrique 82. L'organe de commande 80 est constitué d'un embout hémisphérique 84 formant capot protecteur qui recouvre l'extrémité supérieure de la tige verticale 6 et, dans la position haute de repos de l'organe de manoeuvre 14, celle du manchon coulissant 20.

De cette façon, l'embout 84 protège les pièces du dispositif de maintien de projections diverses, notamment alimentaires. L'embout 84 est solidaire de l'extrémité supérieure de deux fils métalliques rigides 86, verticaux et coulissants chacun dans un trou axial 87 de la tige verticale 6.

L'interrupteur 82, disposé sous le bâti 7 à proximité du moteur 46 auquel il est relié électriquement, est d'un type classique à pression, actionné par un doigt de commande 88 formant came et solidaire de l'extrémité inférieure d'un des fils métalliques rigides 86. L'organe de commande 80 est susceptible de coulissement par rapport à la tige verticale 6, et la came du doigt de commande 88 est conformée de façon que le mouvement de l'organe de commande 80 dans la tige verticale 6 commande à ouverture/fermeture l'interrupteur 80. L'embout 84 présente un rebord périphérique 90 susceptible de coopérer avec un rebord supérieur 90 de l'organe de guidage 70.

Dans la position haute de repos de l'organe de manoeuvre 14, comme cela est représenté à la Figure 6A, le doigt 62 de rétention est inséré dans le cran 78 de la gorge 74 de l'organe de guidage 70. Dans cette position, le rebord périphérique90 de l'embout 84 repose sur le rebord supérieur 75 de l'organe de guidage 70. Le doigt de commande 88 fait alors pression sur l'interrupteur 82 de façon à interdire l'alimentation électrique du moteur électrique 46.

Comme représenté à la Figure 6B, on a actionné l'organe de manoeuvre 14 vers le haut de façon à dégager le doigt de rétention 62 du cran 78, l'embout 84 et l'organe de commande 80 étant soulevés solidairement avec le manchon coulissant 20 et l'organe de guidage 70, jusqu'à une position de butée supérieure matérialisée par le premier cran de fond de gorge 79A. Dans cette position, le doigt de commande 88 est toujours en pression sur l'interrupteur 82, interdisant de ce fait l'alimentation électrique du moteur 46.

En référence maintenant à la Figure 6C, on décrit la descente du manchon coulissant 20 le long de la tige 6 au cours de laquelle le doigt de rétention 62 s'échappe de la gorge 74 par l'ouverture évasée 79B débouchant sur le rebord supérieur 75 de l'organe de guidage 70, l'embout 84 et l'organe de commande 80 suivant ce mouvement de coulissement vers le bas jusqu'à une position de butée de l'embout 84 sur l'extrémité supérieure de la tige verticale 6, plus précisément d'une face interne 91 de l'embout 84 sur une face supérieure 93 de la tige verticale 6. Dans cette position, le doigt de commande 88 est dégagé de l'interrupteur 82, autorisant ainsi l'alimentation électrique du moteur 46.

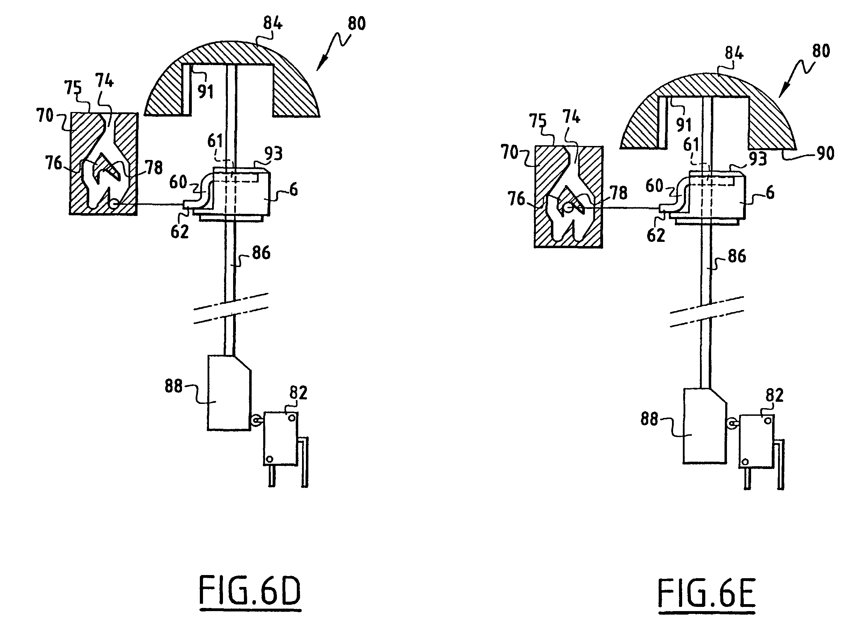

A la Figure 6D, on a représenté ce même ensemble constitué par le dispositif mécanique et le dispositif électrique de commande, dans la position extrême haute de l'organe de manoeuvre 14 consécutif à une remontée dudit organe de manoeuvre 14. Le doigt de rétention 62 a préalablement réintégré la gorge 74 par l'ouverture évasée 79B jusqu'à sa position de butée dans le deuxième cran de fond de gorge 79C. L'embout 84 est soulevé par l'organe de guidage 70 jusqu'à une position identique à celle représentée à la Figure 6B ; d'où une position identique également du doigt de commande 88 par rapport à l'interrupteur 82, et une coupure du circuit d'alimentation du moteur 46.

Enfin, à la Figure 6E, on a représenté l'ensemble revenu à sa position haute de repos, dans laquelle le doigt 62 est inséré dans le cran 78 et maintient en position stable le manchon coulissant 20.

Ces différentes phases de fonctionnement du dispositif mécanique de maintien associées au dispositif de commande de l'alimentation électrique du moteur, ont été synthétisées de façon schématique à la Figure 7.

Il apparaît ainsi plus clairement que l'interrupteur 82 interdit l'alimentation du moteur 46 pour des positions du doigt de rétention 62 dans la gorge 74 de l'organe de guidage 70 situé au-dessous d'un niveau limite choisi légèrement au-dessus du cran 78. Cet état de l'interrupteur est signalé par la mention « OFF ».

Pour des positions du doigt de rétention 62 dans la gorge 74 de l'organe de guidage 70, situées au-dessus de ce niveau limite, l'interrupteur 82 autorise l'alimentation du moteur 46. C'est ce qui est indiqué par la mention « ON ».

La Figure 8 illustre plus particulièrement une disposition prévue pour placer ou maintenir le pendule 60 dans une position angulaire convenable par rapport à la tige 6, qui lui permette, lorsque le doigt de rétention 62 n'est pas en prise dans la gorge 74 de l'organe de guidage 70 comme cela a été représenté à la Figure 6C, de réintégrer ladite gorge 74 lors de la phase de remontée du manchon coulissant 20 en passant dans l'ouverture évasée 79B. Suivant cette disposition particulière, l'embout 84 présente des bords de guidage 95 formés dans son rebord périphérique 90. Ces bords de guidage 95 coïncident sensiblement avec les arêtes du rebord supérieur 75 de l'organe de guidage 70 délimitant l'ouverture évasée 79B, de sorte que le doigt de rétention 62 soit placé en regard de ladite ouverture évasée 79B lorsque de la face interne 91 de l'embout 84 est en butée sur la face supérieure 93 de la tige verticale 6 dans la phase d'utilisation du dispositif représentée à la Figure 6C.

L'invention qui vient d'être décrite assure à l'utilisateur d'un appareil électrique de traitement d'aliments du type précité, un confort d'utilisation consistant à disposer d'une position haute de repos stable de l'organe de manoeuvre. Cela évite à l'utilisateur des efforts à fournir pour assurer ce maintien en position, de façon simultanée avec une opération de remplacement de cassette.

Cette fonction de maintien en position haute du système presseur est en outre assurée par un système entièrement mécanique, donc peu coûteux en termes de fabrication et de maintenance, et d'une grande robustesse.

Ce dispositif mécanique est d'une part sécurisé du fait que la descente de l'organe presseur ne peut être obtenue que par une action volontaire de l'utilisateur, puisque l'organe de manoeuvre doit préalablement être actionné vers le haut.

Il est d'autre part couplé, par des moyens mécaniques et électriques simples, à un dispositif de commande électrique du moteur qui assure une grande sécurité de fonctionnement, en garantissant l'arrêt du moteur dans des positions hautes du système presseur.

## Revendications

1. Appareil électrique de traitement d'aliments comportant un bâti (7) adapté pour recevoir un récipient amovible (4) dans lequel sont disposés les aliments et limité d'un côté par des moyens de coupe (44) actionnés par un moteur électrique (46) et présentant d'un autre côté une ouverture (42) adaptée pour recevoir un organe presseur (12), ledit organe presseur (12) étant actionné par un organe de manoeuvre (14), **caractérisé en ce qu'**une partie (20) dudit organe de manoeuvre est mobile en translation le long d'une tige (6) sensiblement verticale du bâti, entre une position haute de repos dans laquelle l'organe presseur (12) est dégagé du récipient (4) et une position basse dans laquelle l'organe presseur (12) se situe à proximité des moyens de coupe (44), et **en ce que** ledit appareil comporte un dispositif mécanique débrayable de maintien de la partie mobile (20) de l'organe de manoeuvre (14) en position haute, qui comporte un organe en saillie (60) et un organe d'appui (70) coopérant ensemble, l'un étant solidaire de la partie mobile (20) et l'autre de la tige (6), et adaptés pour n'autoriser un déplacement vers le bas de la partie mobile (20) à partir de sa position haute de repos, qu'à condition d'un déplacement préalable de la partie mobile (20) vers le haut.

2. Appareil suivant la revendication 1, **caractérisé en ce que** l'organe en saillie (60) comprend un doigt (62) sensiblement horizontal monté rotatif autour d'un axe sensiblement horizontal.

3. Appareil suivant la revendication 2, **caractérisé en ce que** l'organe d'appui (70) comporte une gorge (74) adaptée pour recevoir une extrémité libre dudit doigt (62) et présentant deux branches distinctes (74A, 74B) s'étendant sensiblement verticalement, décalées horizontalement.

4. Appareil suivant la revendication 3, **caractérisé en ce que** ladite gorge (74) comporte une portion sensiblement transversale (74D) reliant lesdites branches (74A, 74B), dans laquelle est formé un cran (78) adapté pour recevoir de façon stable l'extrémité libre dudit doigt (62), cette position stable définissant la position haute de repos de la partie mobile (20).

5. Appareil suivant la revendication 3 ou 4, **caractérisé en ce que** l'organe d'appui (70) comprend un manchon solidaire de la partie mobile (20), dans la surface interne duquel est formée ladite gorge (74).

6. Appareil suivant l'une quelconque des revendications 1 à 5, **caractérisé en ce que** le dispositif de maintien est associé à un dispositif de commande de l'alimentation électrique du moteur (46), adapté pour interdire l'alimentation du moteur (46) dans une plage déterminée de positions relatives de l'organe en saillie (60) et de l'organe d'appui (70).

7. Appareil suivant la revendication 6, **caractérisé en ce que** le dispositif de commande est adapté pour interdire l'alimentation du moteur (46) dans les positions relatives de l'organe en saillie (60) et de l'organe d'appui (70) correspondant aux positions de la partie mobile (20) situées au-dessus d'une position de coupure, qui se situe au-dessous de la position haute de repos.

8. Appareil suivant la revendication 6 ou 7, **caractérisé en ce que** le dispositif de commande comporte un interrupteur (82) actionné par des moyens de commande (88) solidaires d'un organe de commande (80) monté coulissant sur la tige (6), et déplacé en translation par la partie mobile (20).

9. Appareil suivant les revendications 3 et 8 prises ensemble, **caractérisé en ce que** l'organe de commande coulissant (80) comporte des moyens de guidage (95) coopérant avec l'organe en saillie (60), de façon à placer ou maintenir celui-ci dans une position angulaire déterminée, lorsque l'extrémité libre du doigt (62) de l'organe en saillie (60) n'est pas en prise dans la gorge (74) de l'organe d'appui (70).

10. Appareil suivant la revendication 9, **caractérisé en ce que** l'organe de commande (80) comporte un capot protecteur (84) couvrant, dans la position haute de repos de la partie mobile (20), l'extrémité supérieure de la tige (6) et de la partie mobile (20).

11. Appareil suivant l'une quelconque des revendications 1 à 10, **caractérisé en ce que** le récipient amovible (4) est constitué d'une cassette comportant dans son fond les moyens de coupe (44), lesquels sont entraînés par des moyens d'entraînement (52) contenus dans un socle (10) du bâti, destiné à recevoir ledit récipient (4).

12. Appareil suivant la revendication 11, **caractérisé en ce que** ledit socle (10) est monté rotatif par rapport à la tige (6) dans un plan sensiblement horizontal, entre une position au droit de l'organe presseur (12) et une position dégagée de celui-ci, dans laquelle ladite cassette (4) peut être retirée du socle (10) ou placée sur celui-ci.

## Patentansprüche

1. Elektrisches Gerät zur Bearbeitung von Lebensmitteln, welches ein Gestell (7) aufweist, das zur Aufnahme eines lösbaren Behälters (4), in welchem die Lebensmittel angeordnet werden und der auf der einen Seite durch von einem Elektromotor (46) angetriebene Schneidmittel (44) begrenzt ist und auf der anderen Seite eine Öffnung (42) zur Aufnahme einer Presseneinrichtung (12) aufweist, wobei die Presseneinrichtung (12) durch eine Betätigungseinrichtung (14) betätigt wird, **dadurch gekennzeichnet, dass** ein Teil (20) der Betätigungseinrichtung translatorisch längs einer im Wesentlichen vertikalen Stange (6) des Gestells zwischen einer oberen Ruhestellung, in welcher die Presseneinrichtung (12) vom Behälter (4) gelöst ist, und einer unteren Stellung, in welcher die Presseneinrichtung (12) sich in der Nähe der Schneidmittel (44) befindet, beweglich ist, und dass das Gerät eine auskuppelbare mechanische Vorrichtung zum Halten des beweglichen. Teils (20) der Betätigungseinrichtung (14) in der oberen Stellung aufweist, welche eine vorspringende Einrichtung (60) und eine damit zusammenwirkende Anlageeinrichtung (70) aufweist, wobei die eine mit dem beweglichen Teil (20) und die andere mit der Stange (6) fest verbunden ist, und die so eingerichtet sind, dass sie eine Versetzung des beweglichen Teils (20) aus seiner oberen Ruhestellung nach unten nur unter der Bedingung einer vorhergehenden Verschiebung des beweglichen Teils (20) nach oben gestatten.

2. Gerät nach Anspruch 1, **dadurch gekennzeichnet, dass** die vorspringende Einrichtung (60) einen im Wesentlichen horizontalen Finger (62) aufweist, der um eine im Wesentlichen horizontale Achse drehbar ist.

3. Gerät nach Anspruch 2, **dadurch gekennzeichnet, dass** die Anlageeinrichtung (70) eine Nut (74) aufweist, die zur Aufnahme eines freien Endes des Fingers (62) eingerichtet ist und zwei verschiedene Zweige (74A, 74B) aufweist, die sich horizontal versetzt im Wesentlichen vertikal erstrecken.

4. Gerät nach Anspruch 3, **dadurch gekennzeichnet, dass** die Nut (74) einen die Zweige (74A, 74B) verbindenden im Wesentlichen transversalen Abschnitt (74D) aufweist, in welchem eine Rastkerbe (78) zur Aufnahme des freien Endes des Fingers (62) in stabiler Weise ausgebildet ist, wobei dieses stabile Lage die obere Ruhestellung des beweglichen Teils (20) definiert.

5. Gerät nach Anspruch 3 oder 4, **dadurch gekennzeichnet, dass** die Anlageeinrichtung (70) eine mit dem beweglichen Teil (20) fest verbundene Muffe, in deren Innenfläche die Nut (74) ausgebildet ist, aufweist.

6. Gerät nach irgendeinem der Ansprüche 1 bis 5, **dadurch gekennzeichnet, dass** die Haltevorrichtung einer Steuervorrichtung für die Spannungsversorgung des Motors (46) zugeordnet und so eingerichtet ist, dass sie die Speisung des Motors (46) in einem bestimmten Lagebereich in Bezug auf die vorspringende Einrichtung (60) und die Anlageeinrichtung (70) verbietet.

7. Gerät nach Anspruch 6, **dadurch gekennzeichnet, dass** die Steuervorrichtung so eingerichtet ist, dass sie die Speisung des Motors (46) in den Relativlagen der vorspringenden Einrichtung (60) und der Anlageeinrichtung (70), die den Lagen des beweglichen Teils (20) über einer Schneidposition entsprechen, die sich unter der oberen Ruhestellung befindet, untersagt.

8. Gerät nach Anspruch 6 oder 7, **dadurch gekennzeichnet, dass** die Steuervorrichtung einen Schalter (82) aufweist, der durch Steuermittel (88) betätigt wird, die mit einer Steuereinrichtung (80) fest verbunden sind, die auf der Stange (6) gleitend angebracht ist und durch das bewegliche Teil (20) verschoben wird.

9. Gerät nach den Ansprüchen 3 und 8 zusammengenommen, **dadurch gekennzeichnet, dass** die gleitende Steuereinrichtung (80) Führungsmittel (95) aufweist, die mit der vorspringenden Einrichtung (60) so zusammenwirken, dass diese in einer bestimmten Winkelposition angeordnet oder gehalten wird, wenn das freie Ende des Fingers (62) der vorspringenden Einrichtung (60) nicht in der Nut (74) der Anlageeinrichtung (70) im Eingriff ist.

10. Gerät nach Anspruch 9, **dadurch gekennzeichnet, dass** die Steuereinrichtung (80) eine Schutzkappe (84) aufweist, die in der oberen Ruhestellung des beweglichen Teils (20) das obere Ende der Stange (6) und des beweglichen Teils (20) abdeckt.

11. Gerät nach irgendeinem der Ansprüche 1 bis 10, **dadurch gekennzeichnet, dass** der lösbare Behälter (4) durch eine Kassette gebildet ist, die in ihrem Boden die Schneidmittel (44) aufweist, wobei diese durch Antriebsmittel (52) angetrieben werden, die in einem Sockel (10) des Gestells, der zur Aufnahme des Behälters (4) bestimmt ist, enthalten sind.

12. Gerät nach Anspruch 11, **dadurch gekennzeichnet, dass** der Sockel (10) in Bezug auf die Stange (6) in einer im Wesentlichen horizontalen Ebene zwischen einer Position an der Presseneinrichtung (12) und einer von dieser gelösten Position drehbar ist, in welcher die Kassette (4) von dem Sockel (10) herausgenommen oder auf diesem angeordnet werden kann.

## Claims

1. An electrical food processor comprising a frame (7) adapted to receive a removable container (4) in which food is placed and delimited on one side by cutting means (44) operated by an electric motor (46) and having on another side an opening (42) adapted to receive a presser member (12), said presser, member (12) being operated by a manoeuvring member (14), **characterised in that** a portion (20) of said manoeuvring member is mobile in translation along a substantially vertical rod (6) of the frame between a resting top position in which the presser member (12) is disengaged from the container (4) and a bottom position in which the presser member (12) is situated in the vicinity of the cutting means (44), and **in that** said processor comprises a releasable mechanical device for holding the mobile portion (20) of the manoeuvring member (14) in the top position which includes a projecting member (60) and a bearing member (70) cooperating with each other, one being fastened to the mobile portion (20) and the other to the rod (6), and adapted to allow downward movement of the mobile portion (20) from its resting top position only following prior upward movement of the mobile portion.

2. Processor according to claim 1, **characterised in that** the projecting member (60) comprises a substantially horizontal finger (62) rotatable about a substantially horizontal axis.

3. Processor according to claim 2, **characterised in that** the bearing member (70) comprises a groove (74) adapted to receive a free end of said finger (62) and having two separate branches (74A, 74B) offset horizontally and extending substantially vertically.

4. Processor according to claim (3), **characterised in that** said groove (74) has a substantially transverse portion (74D) connecting said branches (74A, 74B) and in which there is formed a notch (78) adapted to receive the free end of said finger, (62) in a stable manner, this stable position defining the resting top position of the mobile portion (20).

5. Processor according to claim 3 or 4, **characterised in that** the bearing member (70) comprises a sleeve fastened to the mobile portion (20) and in the inside surface of which said groove (74) is formed.

6. Processor according to any of claims 1 to 5, **characterised in that** the holding device is associated with a device controlling the supply of electrical power to the motor (46) and adapted to prevent the supply of power to the motor (46) in a particular range of relative positions of the projecting member (60) and the bearing member (70).

7. Processor according to claim 6, **characterised in that** the control device is adapted to prevent the supply of power to the motor (46) in relative positions of the projecting member (60) and the bearing member (70) corresponding to positions of the mobile portion (20) situated above a cutting position that is situated below the resting top position.

8. Processor according to claim 6 or 7, **characterised in that** the control device comprises a switch (82) operated by actuation means (88) fastened to an actuation member (80) mounted to slide on the rod (6) and moved in translation by the mobile portion (20).

9. Processor according to claim 3 in conjunction with claim 8, **characterised in that** the sliding actuation member (80) comprises guide means (95) cooperating with the projecting member (60) to place or maintain the latter in a particular angular position when the free end of the finger (62) of the projecting member (60) is not engaged in the groove (74) in the bearing member (70).

10. Processor according to claim 9, **characterised in that** the actuation member (80) comprises a protective cap (84) covering the upper end of the rod (6) and the mobile portion (20) in the resting top position of the mobile portion (20).

11. Processor according to any of claims 1 to 10, **characterised in that** the removable container (4) is a cassette having the cutting means (44) at the bottom, which cutting means are driven by drive means (52) contained in a base (10) of the frame adapted to receive said container (4).

12. Processor according to claim 11, **characterised in that** said base (10) is mounted to rotate relative to the rod (6) in a substantially horizontal plane and between a position in line with the presser member (12) and a position disengaged therefrom in which said cassette (4) may be removed from the base (10) or placed thereon.
